# FASCICULE DE BREVET EUROPEEN

(11) **EP 1 084 909 B1**
(45) Date de publication et mention de la délivrance du brevet: **21.04.2004**
(21) Numéro de dépôt: 00402498.0
(22) Date de dépôt: 11.09.2000
(51) Int. Cl.: B60R 13/02, B29C 45/14, B60R 13/08

(54) **Pièce composite pour automobile.**
Kraftfahrzeugverbundteil
Composite part for a motor vehicle

(30) Priorité: 15.09.1999 FR 9911504
(43) Date de publication de la demande: 21.03.2001
(73) Titulaire: EUROSTYLE (S.A.), F-91370 Verrières le Buisson (FR)
(72) Inventeur: Boulbon, Jack, 36130 Deols (FR)
(74) Mandataire: Viard, Jean

(56) Documents cités:
- EP-A- 0 856 390
- DE-A- 3 712 882
- DE-A- 4 228 283
- DE-A- 19 501 292
- FR-A- 2 769 594

## Description

La présente invention a pour objet une pièce composite de matière rigide et semi-rigide destinée à l'automobile.

Plus précisément, l'invention concerne une pièce composite de matière rigide et semi-rigide, comprenant une feuille semi-rigide et une bande thermoplastique surmoulée sur la périphérie de la feuille semi-rigide, la bande rigide comprenant des moyens de fixation de la pièce sur un élément de carrosserie de véhicule automobile.

De telles pièces sont connues du document de brevet DE-A-3712882. L'objet de l'invention est d'utiliser de telles pièces pour améliorer l'insonorisation des véhicules automobiles.

A cette fin, la pièce de l'invention, par ailleurs conforme à la définition générique qu'en donne le préambule ci-dessus, est essentiellement caractérisée en ce que la matière semi-rigide est une matière textile enveloppant la surface supérieure de la roue dudit véhicule automobile et favorisant ainsi l'insonorisation de l'habitacle du véhicule automobile.

Avantageusement, la bande rigide comprend deux lèvres enserrant le bord de la feuille.

Par ailleurs, ces moyens de fixation peuvent consister en des petits boîtiers sur lesquels on rajoute des agrafes ou, plus simplement des clips intégrés. Ainsi tous les points de fixation sont intégrés en une seule opération de surmoulage avec une précision égale à celle obtenue si toute la pièce était en matière thermoplastique. La pièce peut être directement enclipsée sur la carrosserie ce qui permet un gain de temps appréciable.

Selon un mode de réalisation particulier de l'invention, une zone plastique souple est intégrée à la bande rigide. Cette zone souple de la bande rigide peut venir assurer l'étanchéité de la liaison dans des zones délicates de la carrosserie et contribuer à l'insonorisation de l'habitacle.
D'autres caractéristiques et avantages de l'invention apparaîtront au cours de la description qui va suivre de modes particuliers de réalisation, donnés uniquement à titre d'exemple non limitatifs, en regard des dessins qui représentent :
- la figure 1, en perspective, une pièce composite selon l'invention enveloppant la partie supérieure de la roue d'un véhicule automobile ;
- la figure 2, la même pièce que sur la figure 1, vue en coupe selon la ligne II-II de la figure 1 ;
- la figure 3 est une vue d'une liaison entre une pièce semi-rigide et une pièce plastique selon l'invention ;
- les figures 4A et 4B, deux modes de réalisation différents des points de fixation de la partie rigide, sur la carrosserie.

Sur l'ensemble des figures, les mêmes références désignent les mêmes éléments.

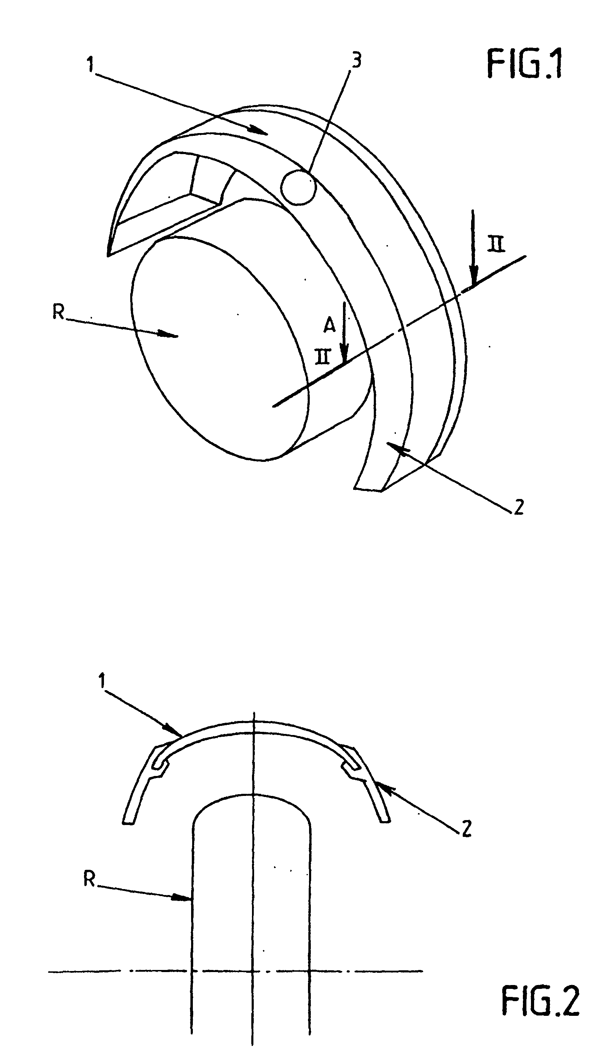

La figure 1 représente une pièce constituée par formage d'un matériau souple rigidifié 1 désigné ci-après par semi-rigide.

La périphérie de cette pièce a été surmoulée, par injection dans un moule d'une bande périphérique de plastique rigide 2 tel que du polypropylène ou de l'ABS, par exemple. Dans la bande de plastique rigide sont prévus des points de fixation 3.

Selon l'invention, le matériau thermoplastique rigide 2 enserre le matériau 1 semi-rigide pour envelopper la surface supérieure d'une roue R d'un véhicule automobile. Les points de fixation prévus sur la partie rigide assurent un assemblage aisé et rapide, et la surface de matériau semi-rigide, généralement plus onéreuse est réduite.

Le matériau semi-rigide est constitué par une matière textile telle que de la moquette par exemple qui permet d'améliorer sensiblement l'insonorisation de l'habitacle en absorbant le bruit provoqué par les projections de gravillons lors du roulage.

La pièce constitue ainsi un pare-boue présentant la forme d'un secteur cylindrique.

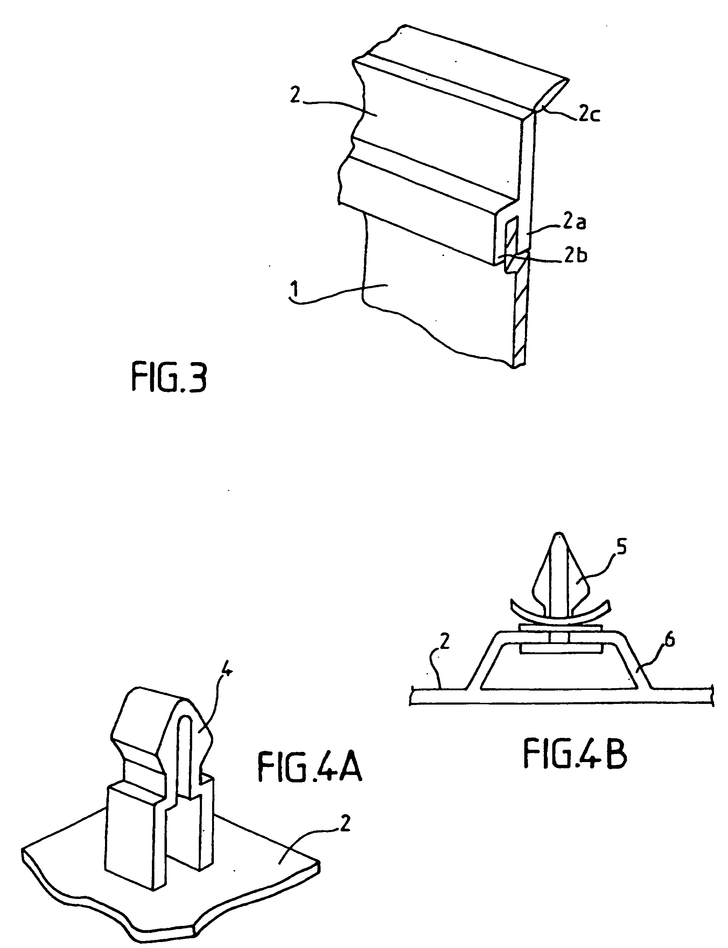

Comme représenté sur la figure 3, l'extrémité de la partie semi-rigide 1 est entourée par deux lèvres 2a, dans le prolongement des surfaces extérieures des feuilles 1 et 2 et 2b, la périphérie étant ainsi emprisonnée entre les deux lèvres. Outre cette action mécanique, la matière thermoplastique injectée à l'état liquide sous pression pénètre lorsque la matière semi-rigide est poreuse à l'intérieur de la zone injectée et assure une solidarisation indissoluble entre les deux pièces.

Il est possible, comme représenté sur la figure 3, lors du surmoulage d'adjoindre à la partie rigide 2 une troisième lèvre souple 2c en vue d'assurer l'étanchéité entre la pièce composite et la carrosserie.

Conformément à une caractéristique de l'invention, la bande rigide 2 est munie de points de fixation 3. Ces points de fixation peuvent consister en des clips 4, moulés par injection avec le moulage de la bande 2 comme représenté sur la figure 4A.

Mais, dans certains cas et en vue des difficultés de moulage qui peuvent être provoquées par la forme des pièces, il est possible de ne mouler dans la bande thermoplastique rigide que des logements 6 dans lesquels seront incluses des agrafes ou clips 5 comme cela est représenté sur la figure 4B.

## Revendications

1. Pièce composite de matière rigide et semi-rigide, comprenant une feuille semi-rigide (1) et une bande rigide (2) de matière thermoplastique surmoulée sur la périphérie de la feuille semi-rigide (1), la bande rigide comprenant des moyens (3) de fixation de la pièce sur un élément de carrosserie de véhicule automobile, **caractérisée en ce que** la matière semi-rigide (1) est une matière textile dans la zone de passage des roues, enveloppant la surface supérieure de la roue dudit véhicule automobile et favorisant ainsi l'insonorisation de l'habitacle du véhicule automobile.

2. Pièce composite selon la revendication 1, **caractérisée en ce que** la bande rigide comprend deux lèvres (2a, 2b) enserrant le bord de la feuille semi-rigide (1).

3. Pièce composite selon l'une des revendications 1 et 2, **caractérisée en ce que** les moyens de fixation (3) consistent en des agrafes (4) intégrées.

4. Pièce composite selon l'une des revendications 1 à 3, **caractérisée en ce que** les moyens de fixation (3) consistent en des logements (6) pouvant recevoir des agrafes rapportées (5).

5. Pièce composite selon la revendication 1, **caractérisée en ce qu'**une lèvre plastique souple (2c) est intégrée à la bande rigide (2).

## Claims

1. Composite part made of rigid and semirigid material, comprising a semirigid sheet (1) and a rigid band (2) of thermoplastic material cast over the periphery of the semirigid sheet (1), the rigid band comprising means (3) for fastening the part on a body element of a motor vehicle, **characterized in that** the semirigid material (1) is a textile material in the tire house area covering the upper surface of the wheel of said motor vehicle and thus promoting sound insulation of the motor vehicle's passenger compartment.

2. Composite part according to claim 1, **characterized in that** the rigid band comprises two lips (2a, 2b) fitting tightly around the edge of the semirigid sheet (1).

3. Composite part according to any of claims 1 and 2, **characterized in that** the fastening means (3) is composed of built-in clips (4).

4. Composite part according to any of claims 1 to 3, **characterized in that** the fastening means (3) is composed of grooves (6) capable of receiving attached clips (5).

5. Composite part according to claim 1, **characterized in that** a flexible plastic lip (2c) is built into the rigid band (2).

## Patentansprüche

1. Verbundteil aus starrem und halbstarren Material, umfassend ein halbstarres Blatt (1) und ein starres Band (2) aus Thermoplast, das über den Randbereich des halbstarren Blatts (1) ausgegossen wird, wobei das starre Band Mittel (3) zur Befestigung des Teils an einem Karosserie-Element eines Kraftfahrzeugs umfasst, **dadurch gekennzeichnet, dass** das halbstarre Material (1) im Bereich des Raddurchgangs ein Spinnstoff ist, der die obere Fläche des Kraftfahrzeugrads umhüllt und somit die Schalldämpfung des Fahrgastraums des Kraftfahrzeugs fördert.

2. Verbundteil nach Anspruch 1, **dadurch gekennzeichnet, dass** das starre Band zwei Lippen (2a, 2b) umfasst, die den Rand des halbstarren Blatts (1) umschließen.

3. Verbundteil nach einem der Ansprüche 1 und 2, **dadurch gekennzeichnet, dass** das Befestigungsmittel (3) aus integrierten Klammern (4) besteht.

4. Verbundteil nach einem der Ansprüche 1 bis 3, **dadurch gekennzeichnet, dass** das Befestigungsmittel (3) aus Aufnahmen (6) besteht, die aufgesetzte Klammern (5) aufnehmen können.

5. Verbundteil nach Anspruch 1, **dadurch gekennzeichnet, dass** die flexible Plastiklippe (2c) in das starre Band (2) integriert ist.
